# EUROPÄISCHE PATENTSCHRIFT

(11) **EP 2 131 940 B1**
(45) Veröffentlichungstag und Bekanntmachung des Hinweises auf die Patenterteilung: **09.11.2011**
(21) Anmeldenummer: 08718064.2
(22) Anmeldetag: 20.03.2008
(51) Int. Cl.: B01D 35/30

(54) **VORRICHTUNG ZUR BEHANDLUNG VON WASSER, INSBESONDERE FILTERVORRICHTUNG, UND KARTUSCHE**
DEVICE FOR THE TREATMENT OF WATER, IN PARTICULAR A FILTER DEVICE, AND CARTRIDGE
DISPOSITIF DE TRAITEMENT D'EAU, EN PARTICULIER DISPOSITIF DE FILTRATION, ET CARTOUCHE

(30) Priorität: 05.04.2007 DE 102007017388
(43) Veröffentlichungstag der Anmeldung: 16.12.2009
(73) Patentinhaber: Brita GmbH, 65232 Taunusstein (DE)
(72) Erfinder: NAMUR, Marc, 64297 Darmstadt (DE)
(74) Vertreter: Mehler Achler
(86) Internationale Anmeldenummer: PCT/EP2008/053344
(87) Internationale Veröffentlichungsnummer: WO 2008/122496

(56) Entgegenhaltungen:
- EP-A- 0 887 100
- EP-A- 1 277 398
- WO-A-01/83078
- WO-A-2005/077490

## Beschreibung

Die Erfindung betrifft eine Vorrichtung zur Behandlung von Wasser, insbesondere eine Filtervorrichtung, mit einer Kartusche, die einen Behälter zur Aufnahme von Behandlungsmittel für Wasser, insbesondere zur Aufnahme von Filtermittel, und einen auf dem Behälter angeordneten Anschlusskopf aufweist, und mit einem Anschlusselement, das eine Aufnahme für den Anschlusskopf umfasst. Die Erfindung bezieht sich auch auf eine Kartusche, insbesondere auf eine Filterkartusche.

Unter der Behandlung von Wasser wird außer der Filtration auch die dosierte Abgabe von Stoffen an das Wasser verstanden. Die Abgabe von Stoffen kann auch mit einer Filtration des Wassers kombiniert sein.

Unter Filterkartuschen werden zum einen solche verstanden, die ein siebartiges Gebilde zur mechanischen Filtration aufweisen. Zum anderen werden unter Filterkartuschen auch solche verstanden, die außer einem siebartigen Gebilde mindestens ein Filtermedium, z. B. in Granulatform, enthalten, das zur chemischen und/oder mechanischen Entfernung und/oder Verminderung von organischen und/oder anorganischen Verunreinigungen dient. Derart ausgestattete Filterkartuschen ermöglichen somit eine nicht-mechanische Filtration, die mit einer mechani-schen Filtration kombiniert sein kann. Diese Filterkartuschen werden zur Optimierung von Wasser eingesetzt, wobei unter Optimierung die mechanische und/oder nicht-mechanische Filtration verstanden wird. Hierzu zählt z. B. die Enthärtung und Entkalkung von Trinkwasser.

Die Filtration kann druckgetrieben, d. h. mit Überdruck oder mit Unterdruck, oder schwerkraftgetrieben durchgeführt werden.

Aus der WO 2005/077490 A ist eine Filtervorrichtung bekannt, die einen schwenkbaren Deckel aufweist, der an einer Anschlussarmatur einer Filterkartusche befestigt ist.

Der Deckel besitzt eine Nabe, die ein in der Zufuhrleitung der Anschlussarmatur befindliches Absperrventil betätigt. Wenn der Deckel nach oben geschwenkt wird, wird das Absperrventil verschlossen, so dass die Filterkartusche entnommen werden kann. Wenn der Deckel heruntergeschwenkt wird, wird das Absperrventil geöffnet.

Die beiden Seitenwände des Deckels besitzen an ihrer Innenseite jeweils Führungsnuten, die beim Herunterschwenken des Deckels mit seitlich an der Filterkartusche angeordneten Zapfen zusammenwirken. Die eingesetzte Filterkartusche wird auf diese Weise in ihrer Position gehalten und verriegelt.

Aus der US 5,653,871 ist eine Filtervorrichtung mit Filterkartusche und mit einem Anschlusselement bekannt. Die Filterkartusche besitzt einen zylindrischen Anschlusskopf, der von unten in die Aufnahme des Anschlusselementes eingesteckt wird. Im eingesteckten Zustand liegen die Einlassöffnung und die Zulauföffnung einerseits und die Auslass- und Ablauföffnung andererseits gegenüber. Zur Fixierung des Anschlusskopfes und somit der Kartusche in Anschlusselement ist eine Art Bajonettverschluss vorgesehen. Der Bajonettverschluss hat jedoch den Nachteil, dass die Kartusche und/oder das Anschlusselement beim Einstecken insgesamt gedreht werden muss/müssen, was einerseits einen erhöhten Kraftaufwand erfordert und andererseits die Dichtelemente beschädigen kann, die im Bereich der Zulauf- und Ablauföffnung angeordnet sind.

Es ist daher Aufgabe der Erfindung, eine Vorrichtung zur Behandlung von Wasser zu schaffen, bei der die Verbindung von Aufnahmeelement und Kartusche auf einfache Weise möglich ist und beide Komponenten sicher miteinander verbunden sind.

Die Aufgabe wird mit einer Vorrichtung zur Behandlung von Wasser gemäß den Merkmalen des Anspruches 1 gelöst.

Der Vorteil besteht darin, dass der Anschlusskopf in das Aufnahmeelement lediglich eingesteckt wird, so dass anschließend die Verriegelungswelle nur noch in die Verriegelungsstellung gedreht werden muss. Die Verriegelungswelle fixiert den Anschlusskopf im Aufnahmeelement, so dass die Kartusche nicht nach unten herausrutschen kann. Zum Entfernen der Kartusche wird die Verriegelungswelle in ihre Entriegelungsstellung gedreht und die Kartusche aus dem Anschlusselement herausgezogen.

Die Verriegelungswelle ist im Anschlusselement angeordnet. Der Anschlusskopf weist mindestens eine Aussparung auf, in die die Verriegefungswelle in ihrer Verriegelungsstellung eingreift. Durch das Zusammenwirken einer drehbaren Verriegelungswelle mit einer Aussparung im Anschlusskopf wird eine einfache und wirkungsvolle Fixierung des Anschlusskopfes erreicht, ohne dass die Kartusche und/oder das Anschlusselement bei der Montage oder beim Entfernen der Kartusche gedreht werden muss.

Vorzugsweise erstreckt sich die Verriegelungswelle senkrecht zur Längsachse der Kartusche. Damit liegt die Verriegelungswelle senkrecht zur Steckrichtung, so dass die Filterkartusche sicher im Anschlusselement gehalten wird und in Verriegelungsstellung der Verriegelungswelle nicht herausrutschen kann.

Eine zur Längsachse parallele Anordnung der Verriegelungswelle empfiehlt sich dann, wenn aus Platzgründen der Griff der Verriegelungswelle oben angebracht werden muss. In dieser Ausführung kann der Griff beispielsweise auch als Drehring ausgebildet sein.

Die Verriegelungswelle weist vorzugsweise mindestens einen Verriegelungsabschnitt auf.

Gemäß einer ersten Ausführungsform kann der Verriegelungsabschnitt einen Exzenterabschnitt umfassen. Bei dem Exzenterabschnitt handelt es sich um einen Wellenabschnitt, der gegenüber der zylindrischen Außenfläche der Verriegelungswelle vorsteht. Dieser Exzenterabschnitt kann mit einem entsprechenden Rücksprung kombiniert sein, so dass die Achse des Exzenterabschnittes versetzt zur Achse der Verriegelungswelle angeordnet ist. Der Exzenterabschnitt kann ebenfalls zylindrisch sein.

Ein Exzenterabschnitt hat den Vorteil, dass er beim Eingreifen in die Aussparung des Anschlusskopfes diesen sowohl form- als auch kraftschlüssig fixiert. Durch den Exzenterabschnitt kann eine Kraft auf den Anschlusskopf ausgeübt werden, so dass dieser klemmend im Aufnahmeelement gehalten wird. Es ist dadurch weiterhin möglich, den Anschlusskopf auch in Längsrichtung und/oder in Querrichtung der Kartusche geringfügig zu verschieben, wenn sich die Verriegelungswelle senkrecht zur Längsachse der Kartusche erstreckt.

Gemäß einer weiteren Ausführungsform weist der Verriegelungsabschnitt lediglich eine Ausnehmung auf, ohne dass im Verriegelungsabschnitt die Welle gegenüber der zylindrischen Außenkontur vorsteht. Eine solche Verriegelungswelle kann in ein einteiliges Aufnahmeelement eingesetzt werden. Die Montage dieser Verriegelungswelle ist einfacher als bei einer Verriegelungswelle mit Exzenterabschnitt.

Es ist weiterhin von Vorteil, wenn die Verriegelungswelle weitere Funktionen übernimmt bzw. wenn in die Verriegelungswelle weitere Zusatzfunktionen integriert werden.

Vorzugsweise weist das Anschlusselement einen Einlaufkanal und einen Auslaufkanal auf.

Es ist bevorzugt, dass die Verriegelungswelle im Einlaufkanal und/oder Auslaufkanal angeordnet ist, wobei die Verriegelungswelle im Einlaufkanal und/oder im Auslaufkanal einen Ventilabschnitt aufweist. Mittels eines solchen Ventilabschnittes kann der Zulauf bzw. der Ablauf abgesperrt werden, was dann von Vorteil ist, wenn die Kartusche ausgetauscht werden soll. Es wird dadurch verhindert, dass versehentlich Wasser nachströmt, wenn keine Filterkartusche im Anschlusselement angeordnet ist, das Anschlusselement aber an die Wasserversorgung bereits angeschlossen ist. Hierbei ist es weiterhin bevorzugt, wenn der Verriegelungsabschnitt der Verriegelungswelle bezüglich der Ventilabschnitte entsprechend angeordnet ist, so dass das Absperren von Einlaufkanal und/oder Auslaufkanal genau dann stattfindet, wenn die Verriegelungswelle sich in der Entriegelungsstellung befindet.

Gemäß einer Ausführungsform weist der Ventilabschnitt einen Verbindungskanal auf, der die beiden Zweige des Einlaufkanals und/oder des Auslaufkanals miteinander verbindet.

Gemäß einer besonderen Ausführungsform besteht der Verbindungskanal aus einer Teilringnut, die sich über einen Abschnitt des Außenumfangs der Verriegelungswelle erstreckt.

Vorzugsweise ist die Teilringnut von mindestens einem Dichtelement umgeben. Die gesamte Teilringnut ist somit abgedichtet.

Vorzugsweise weist die Verriegelungswelle zwei Ventilabschnitte auf und zwar jeweils einen Ventilabschnitt für den Einlaufkanal und ein Ventilabschnitt für den Auslaufkanal. Vorzugsweise ist der Verriegelungsabschnitt zwischen den beiden Ventilabschnitten angeordnet. Die Verriegelungswelle kann einteilig oder mindestens zweiteilig, vorzugsweise dreiteilig, ausgeführt sein.

Je nach Bauweise des Anschlusselements und der Anordnung von Eintritts- und Austrittsöffnungen am Anschlusskopf können die beiden Ventilabschnitte auch nebeneinander angeordnet sein. Der Verriegelungsabschnitt befindet sich neben dem Ventilabschnittspaar.

Zusätzlich kann die Verriegelungswelle eine Bypasseinrichtung aufweisen. Diese Bypasseinrichtung ist von Vorteil, wenn die Maschine, an die Vorrichtung zur Behandlung von Wasser angeschlossen ist, nicht abgestellt werden soll, wenn die Kartusche getauscht wird. Die Bypasseinrichtung erlaubt ein Weiterlaufen der Maschine, was bedeutet, dass der Wasserstrom nicht unterbrochen werden muss. Die Bypasseinrichtung kommt dann zum Einsatz, wenn die Verriegelungsstellung verlassen wird.

Vorzugsweise umfasst die Bypasseinrichtung einen Bypasskanal, der sich im Innern der Verriegelungswelle erstreckt und in die Ventilabschnitte der Verriegelungswelle mündet.

Der Ventilabschnitt ist zu diesem Zweck beidseitig jeweils mit mindestens einem weiteren Dichtelement versehen.

Die Aussparung weist im Anschlusskopf mindestens eine Aussparungsfläche auf. Die Aussparung kann vorzugsweise profiliert sein. Die Aussparung weist vorzugsweise mindestens zwei Aussparungsflächen auf, die in Längsrichtung der Aussparung höhenversetzt sind. Dies bedeutet, dass bei einer vorzugsweise runden oder teilkreisförmigen Aussparung mindestens zwei Aussparungsflächen nebeneinander angeordnet sind, die zwei unterschiedliche Krümmungsradien aufweisen bzw. deren Mittelpunkte der Krümmungsradien versetzt zueinander angeordnet sind.

Man kann über die Profilierung der Aussparung eine Kennzeichnung der Kartuschen herbeiführen, indem für den Anwender anhand eines bestimmten Schlüssels erkennbar ist, welche aktiven Medien sich in der Kartusche befinden. Der Anwender weiß sofort, für welchen Anwendungszweck die Kartusche geeignet und bestimmt ist, so dass nicht versehentlich Kartuschen für andere Zwecke in das Anschlusselement eingesetzt werden. Die Kartuschen werden dadurch verwechslungssicher.

Der Verriegelungsabschnitt der Verriegelungswelle weist vorzugsweise mindestens eine Verriegelungsfläche auf, die an einer Aussparungsfläche angreift.

Vorzugsweise ist der Verriegelungsabschnitt mit seiner/n Verriegelungsfläche bzw. -flächen an die Kontur einer solchen profilierten Aussparung angepasst. Damit wird sichergestellt, dass nur diejenige Kartusche eingesetzt werden kann und sicher fixiert werden kann, deren Aussparung mit der Verriegelungsfläche der Verriegelungswelle zusammenpasst.

Vorzugsweise weist das Anschlusselement eine Klinke auf, die an der Verriegelungswelle in Verriegelungsstellung angreift und die Verriegelungswelle festlegt. Diese Klinke hat den Vorteil, dass in der Entriegelungsstellung, in der die Bypasseinrichtung wirksam ist, keine versehentliche Drehung der Verriegelungswelle stattfinden kann, was dazu führen würde, dass das einströmende Wasser sich in die Aufnahme des Anschlusselementes ergießen würde.

Die Klinke ist vorzugsweise so ausgebildet, dass sie sich beim Entfernen des Anschlusskopfes entweder selbstständig oder durch Federkraft in die Sperrstellung bewegt.

Die Kartusche ist **dadurch gekennzeichnet, dass** der Anschlusskopf mindestens eine Aussparung für das Eingreifen einer Verriegelungswelle des Anschlusselements aufweist.

Vorzugsweise weist die Aussparung im Anschlusskopf mindestens eine Aussparungsfläche auf.

Die Aussparung kann vorzugsweise profiliert sein. Die Aussparung weist vorzugsweise zwei Aussparungsflächen auf, die in Längsrichtung der Aussparung höhenversetzt angeordnet sind.

Beispielhafte Ausführungsformen der Erfindung werden nachfolgend anhand der Zeichnungen näher erläutert.

Es zeigen:
- Figur 1: eine Seitenansicht der Vorrichtung;
- Figur 2: eine Draufsicht auf die in Figur 1 gezeigte Vorrichtung;
- Figur 3a: einen Vertikalschnitt von Anschlusskopf und Anschlusselement längs der Linie III-III in Figur 2 mit der Verriegelungswelle in Verriegelungsstellung;
- Figur 3b: eine Schnittdarstellung gemäß der Figur 3a mit der Verriegelungswelle in Entriegelungsstellung;
- Figuren 4a bis 4c: drei verschiedene Ausgestaltungen der Verriegelungswelle gemäß einer ersten Ausführungsform;
- Figur 4d: eine weitere Ausführungsform der Verriegelungswelle;
- Figuren 5a bis 5c: drei verschiedene Ausgestaltungen der Verriegelungswelle gemäß einer zweiten Ausführungsform;
- Figur 6: eine perspektivische Darstellung einer Kartusche gemäß einer ersten Ausführungsform;
- Figur 7: eine perspektivische Darstellung einer Kartusche gemäß einer zweiten Ausführungsform;
- Figur 8: eine perspektivische Darstellung einer Kartusche gemäß einer dritten Ausführungsform;
- Figuren 9a, b: zwei perspektivische Darstellungen einer Kartusche gemäß einer vierten und fünften Ausführungsform;
- Figur 10: einen Vertikalschnitt von Anschlusskopf und Anschlusselement längs der Linie X-X in Figur 2;
- Figuren 11a, b: zwei Vertikalschnitte durch die in Figur 10 gezeigte Vorrichtung längs der Linie XI-XI und
- Figuren 12a, b: zwei Horizontalabschnitte durch die in den Figuren 11a, b gezeigte Vorrichtung längs der Linie XII-XII.

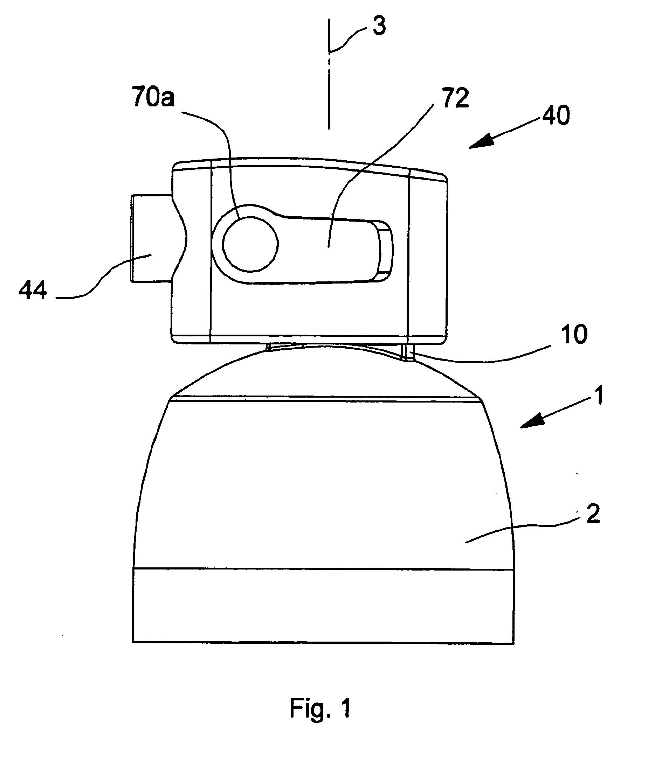

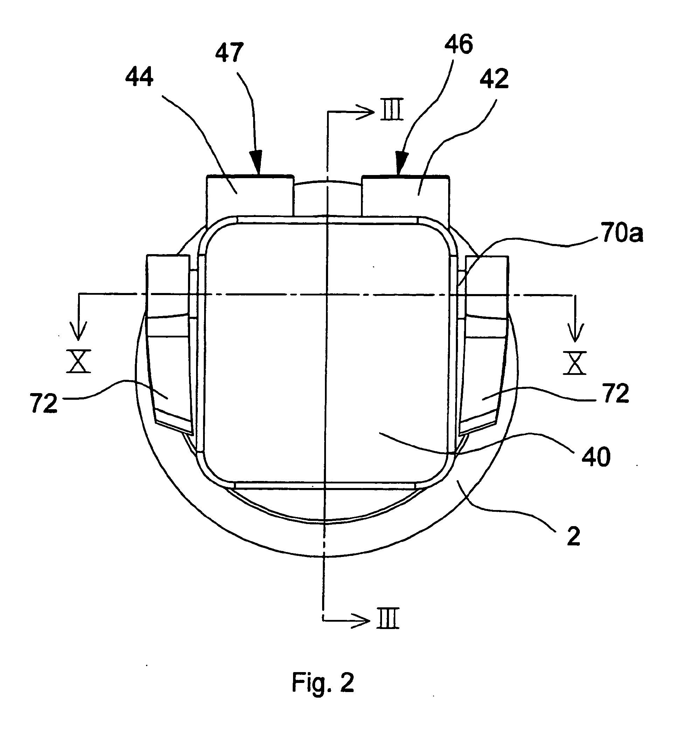

In der Figur 1 ist eine Vorrichtung zur Behandlung von Wasser in Seitenansicht dargestellt. Die Vorrichtung weist eine Kartusche 1 mit einem Behälter 2 zur Aufnahme von Behandlungsmittel für Wasser, insbesondere zur Aufnahme von Filtermittel auf, wobei auf dem Behälter 2 der Anschlusskopf 10 angeordnet ist, der in das Anschlusselement 40 eingesteckt ist. Das Anschlusselement 40 stellt die Verbindung zu einer Zulauf- und einer Ablaufleitung her, die in der Figur 1 nicht dargestellt ist. Dementsprechend weist das Anschlusselement 40 einen Einlaufstutzen 42 (siehe Figur 2) und einen Auslaufstutzen 44 auf.

Senkrecht zur Längsachse 3 der Kartusche 1 erstreckt sich durch das Anschlusselement 40 eine Verriegelungswelle 70a, die gegenüber der Außenwand des Anschlusselementes 40 nach außen vorsteht, wo ein hebelförmiger Griff 72 angeordnet ist, mit dem die Verriegelungswelle 70a gedreht werden kann.

In der Figur 2 ist die Draufsicht auf die in Figur 1 dargestellte Vorrichtung zu sehen. Die Verriegelungswelle 70a erstreckt sich beiderseits über das Anschlusselement 40 hinaus und trägt an den beiden Enden jeweils einen Griff 72.

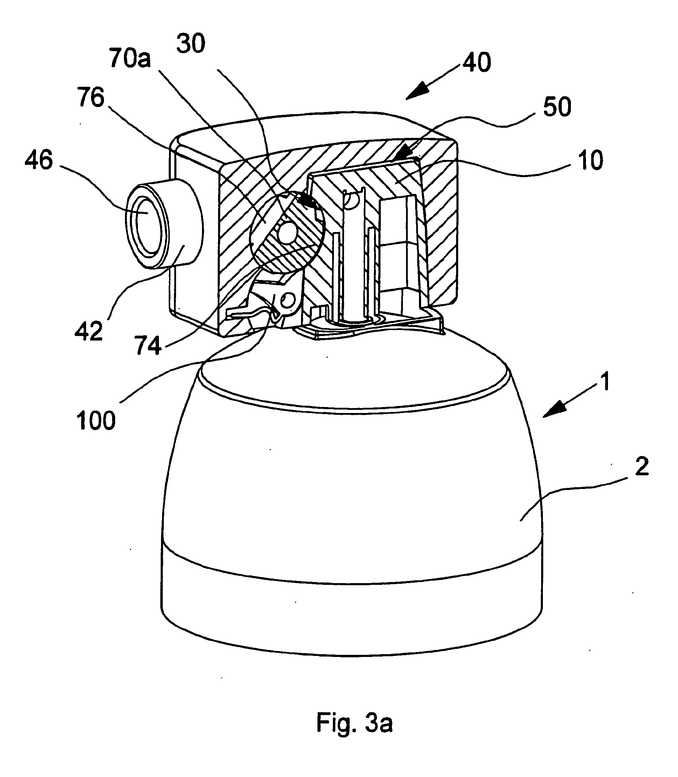

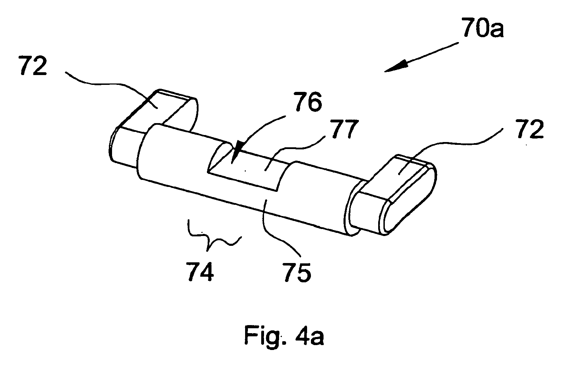

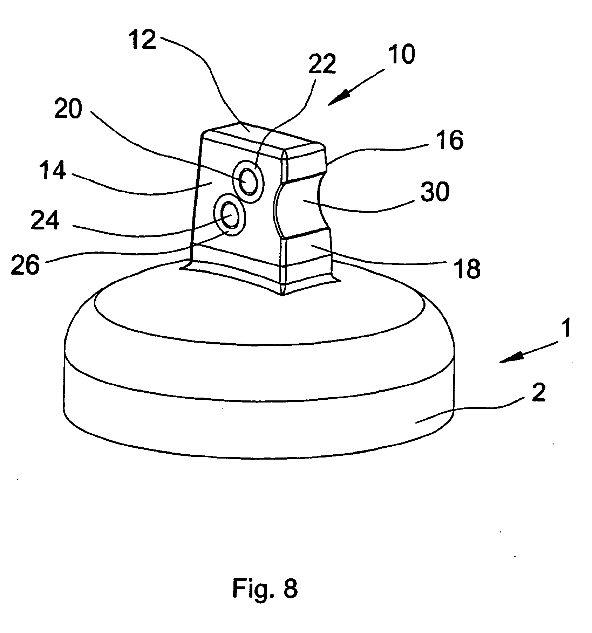

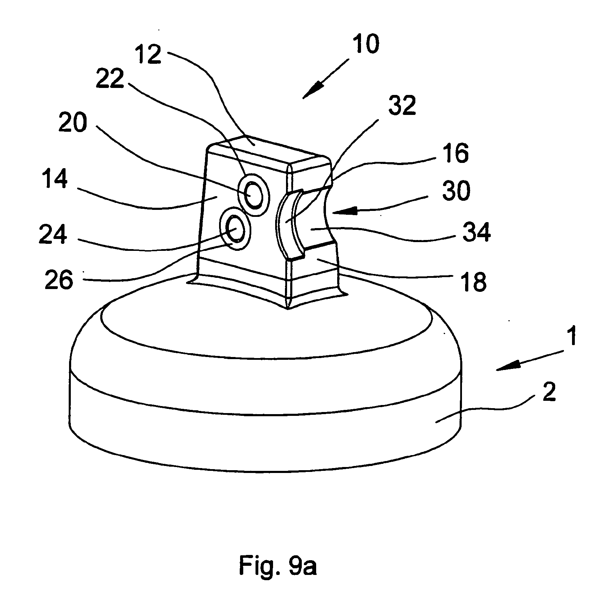

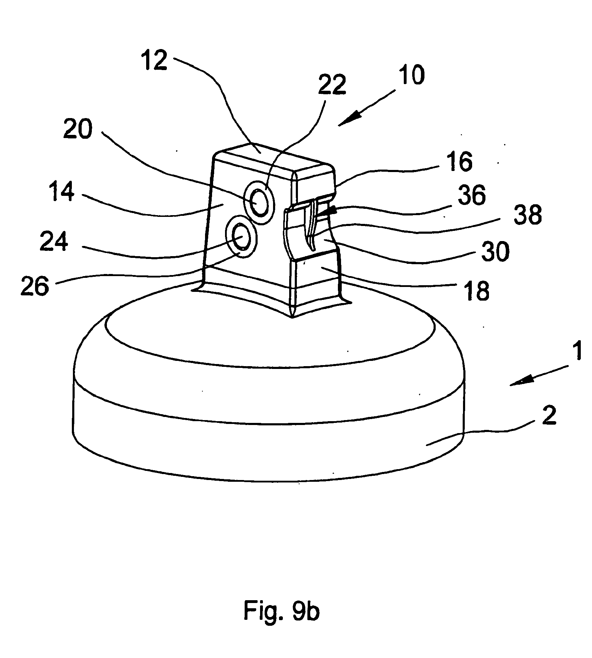

In der Figur 3a ist ein Vertikalschnitt längs der Linie III-III durch die in Figur 2 gezeigte Vorrichtung dargestellt. Der Anschlusskopf 10, der in Figur 8 perspektivisch dargestellt ist, befindet sich in der Aufnahme 50 des Anschlusselementes 40. Die Verriegelungswelle 70a, die im Detail in Verbindung zusammen mit den Figuren 4a bis c erläutert wird, befindet sich in Verriegelungsstellung. Es ist zu sehen, dass die Verriegelungswelle 70a einen Ven-iegelungsabschnitt 74 aufweist, der in eine Aussparung 30 des Anschlusskopfes 10 eingreift. Die Aussparung 30 ist im Wesentlichen teilkreisförmig ausgeführt und wird im Zusammenhang mit den Figuren 8 und 9a, b erläutert.

Die Aussparung 30 erstreckt sich senkrecht zur Längsachse 3 der Vorrichtung über die gesamte Breite des Anschlusskopfes 10, der in der Verriegelungsstellung durch die Verriegelungswelle 70a durch Formschluss gehalten wird. Der Anschlusskopf 10 kann in Verriegelungsstellung nicht nach unten herausgezogen werden. Da in der Regel das Anschlusselement 40 ortsfest montiert ist, hängt die Kartusche 1 am Anschlusselement 40. Stärke der Verriegelungswelle 70a und Größe der Aussparung 30 sind auf das Gewicht der Kartusche 1 ausgelegt, so dass die Kartusche 1 sicher und unverrückbar im Anschlusselement 40 gehalten wird.

In der Figur 3a ist zusätzlich unter der Verriegelungswelle 70a eine Klinke 100 angeordnet, die beim Einstecken des Anschlusskopfes 10 in ihre Freigabestellung geschwenkt wird.

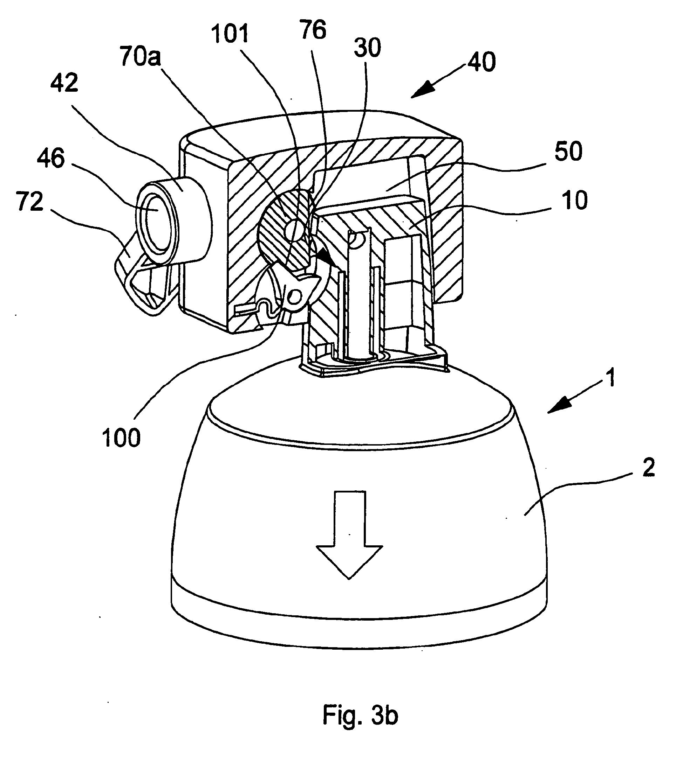

In der Figur 3b befindet sich die Verriegelungswelle 70a in Entriegelungsstellung, wobei die Ausnehmung 76 (siehe auch Figur 3a) des Verriegelungsabschnittes 74 der Aussparung 30 des Anschlusskopfs 10 gegenüberliegt, so dass der Anschlusskopf 10 freigegeben wird und nach unten aus dem Anschlusselement 40 herausgezogen werden kann.

Beim Herausziehen des Anschlusskopfes 10 fällt die Klinke 100 in ihre Sperrstellung und greift hierbei in eine Kerbe 101 der Verriegelungswelle 70a ein, die somit in der Entriegelungsstellung fixiert wird.

In den Figuren 4a bis c sind drei verschiedene Ausgestaltungen einer Verriegelungswelle 70a dargestellt. Die Verriegelungswelle 70a besteht aus einem zylindrischen Bauteil, das im Veniegelungsabschnitt 74 eine Ausnehmung 76 mit ebener Bodenfläche 77 und eine zylindrische Verriegelungsfläche 75 aufweist, wie dies auch in den Figuren 3a und b zu sehen ist. An den beiden Enden befinden sich die Griffe 72. Die Länge der Ausnehmung 76 ist größer gleich der Breite des Anschlusskopfes 10.

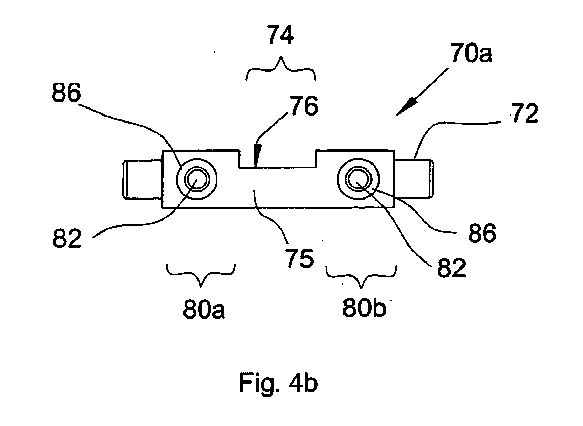

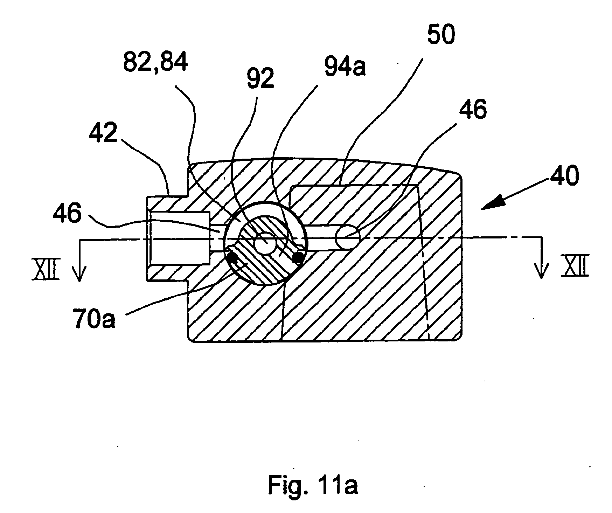

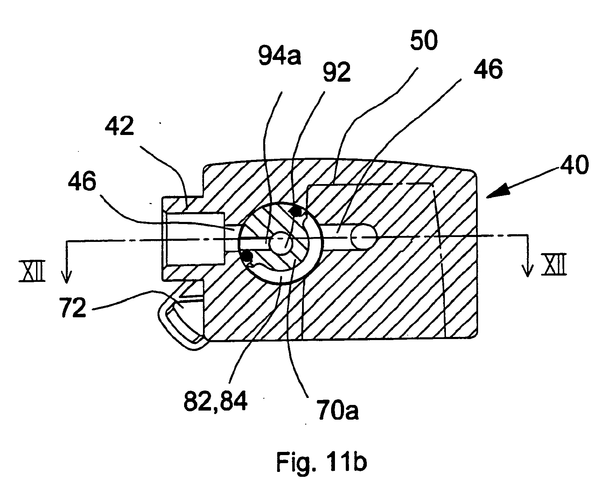

In der Figur 4b ist eine weitere Ausgestaltung dieser Ausführungsform dargestellt, in der neben dem Verriegelungsabschnitt 74 beidseitig jeweils ein Ventilabschnitt 80a, b vorgesehen ist. Die Ventilabschnitte 80a, b zeichnen sich dadurch aus, dass sie im Einlaufkanal 46 und im Auslaufkanal 47 des Anschlusselementes 40 angeordnet sind (s. auch Figur 11a,b) und zwei Verbindungskanäle 82 aufweisen.

Die Ventilabschnitte 80a, b haben die Aufgabe, den Einlaufkanal 46 und den Auslaufkanal 47 freizugeben, wenn sich die Verriegelungswelle 70a in Verriegelungsstellung befindet, was dann der Fall ist, wenn die Kartusche auch in das Aufnahmeelement 40 eingesteckt ist. In Entriegelungsstellung wird der Einlaufkanal 46 und der Auslaufkanal 47 abgesperrt, so dass die Kartusche aus dem Anschlusselement 40 entfernt werden kann, ohne das zu filtrierendes Wasser nachströmen kann und somit unkontrolliert aus der Aufnahme 50 des Aufnahmeelementes 40 herauslaufen kann.

Zu diesem Zweck sind die beiden Verbindungskanäle 82, bei denen es sich um senkrecht zur Wellenachse eingebrachte Bohrungen handelt, entsprechend der Ausrichtung der Ausnehmung 76 angeordnet. Um die Öffnung der Verbindungskanäle 82 sind jeweils Dichtelemente 86, z. B. O-Ringe, in die Oberfläche der Verriegelungswelle 70a eingelegt.

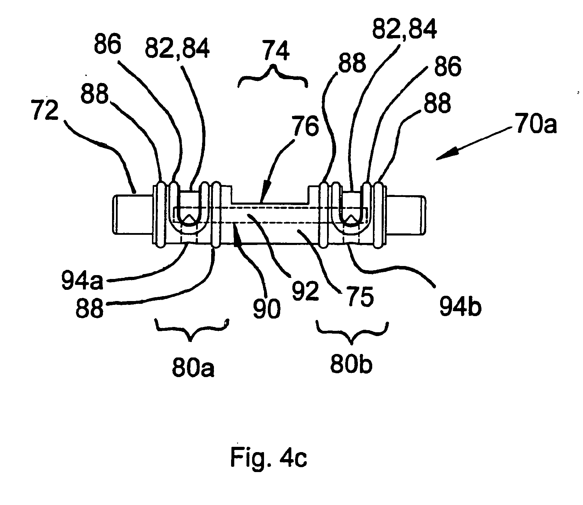

In der Figur 4c ist eine weitere Ausgestaltung der Verriegelungswelle 70a dargestellt, bei der der Verbindungskanal 82 durch eine Teilringnut 84 im Ventilabschnitt 80a, b gebildet wird. Um die Teilringnut 84 ist ebenfalls ein Dichtelement 86, z. B. ein O-Ring, angeordnet.

In der in Figur 4c gezeigten Ausführung ist zusätzliche eine Bypasseinrichtung 90 vorgesehen, die einen Bypasskanal 92 umfasst, der sich in Längsrichtung der Verriegelungswelle 70a im Innern der Verriegelungswelle erstreckt und im Bereich der Ventilabschnitte 80a, 80b Öffnungen 94a, b aufweist. Diese Ausführung hat den Vorteil, dass in der Entriegelungsstellung im Gegensatz zu der Ausführung gemäß der Figur 4b der Zustrom nicht unterbrochen wird, sondern das zugeführte Wasser durch die Verriegelungswelle 70a hindurch dem Auslaufkanal 47 zugeführt werden kann. Bei einem Kartuschenwechsel ist es somit nicht notwendig, den Wasserfluss zu unterbrechen. Maschinen, an die die Vorrichtung zur Behandlung von Wasser angeschlossen ist, müssen zu diesem Zweck nicht abgeschaltet werden.

Zur Abdichtung sind beidseitig zum Verbindungskanal 82 und zu den Öffnungen 94a, b Dichtelemente 88, z. B. Dichtringe, angeordnet, die die Ventilabschnitte 80a, 80b abschließen.

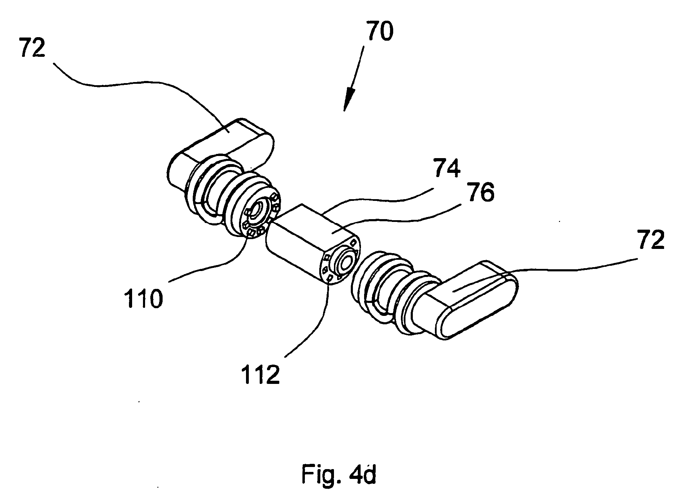

In der Fig. 4d ist die in Fig. 4c dargestellte Verriegelungswelle 70a perspektivisch dargstellt. Anstelle einer einstückigen Ausgestaltung ist die Verriegelungswelle 70a dreiteilig ausgebildet, wobei die drei Teile mittels eines Stecksystems, das aus Stiften 110 und Stecköffnungen 112 besteht, verbunden werden. Auf den Mittelabschnitt, der den Verriegelungsabschnitt 74 mit der Ausnehmung 76 umfasst, werden die Endstücke mit den Ventilabschnitten 80a, b und den Griffen 72 aufgesteckt. Die Mehrteiligkeit der Verriegelungswelle 70a erleichtert den Einbau der Welle.

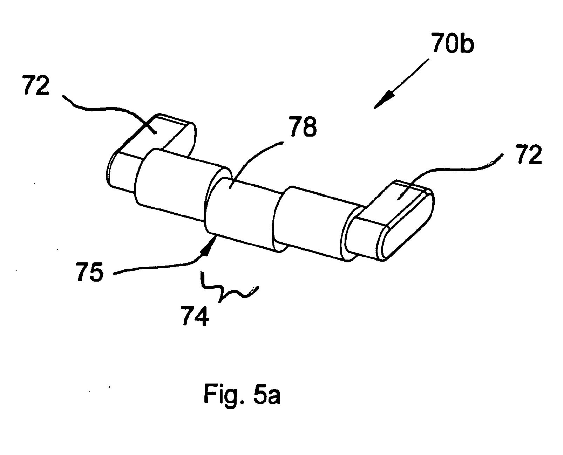

In der Figur 5a ist eine zweite Ausführungsform einer Verriegelungswelle 70b dargestellt, die sich von der Verriegelungswelle 70a gemäß den Figuren 4a bis c dadurch unterscheidet, dass der Verriegelungsabschnitt 74 anstelle einer Ausnehmung in der ansonsten zylindrischen Welle einen exzentrisch angeordneten Abschnitt 78 aufweist.

Dieser Exzenterabschnitt 78 besteht aus einem zylindrischen oder teilzylindrischen Abschnitt, der sich in Verriegelungsstellung in die Ausnehmung 30 des Anschlusselementes 40 hineindreht und den Anschlusskopf nicht nur durch Formschluss, sondern auch durch Kraftschluss hält. Der Exzenterabschnitt 78 hat den Vorteil, dass beim Eindrehen des Verriegelungsabschnittes 74 in die Aussparung 30 eine Kraft auf den Anschlusskopf 10 ausgeübt werden kann, so dass der Anschlusskopf 10 in die Aufnahme 50 den Anschlusselementes 40 hineingezogen wird und dort klemmend gehalten wird. Beim Lösen der Verriegelung wird durch Drehen in die entgegengesetzte Richtung der Anschlusskopf 10 aus der Aufnahme herausgedrückt, was die Entnahme der Kartusche 1 bei einem Austausch erleichtert.

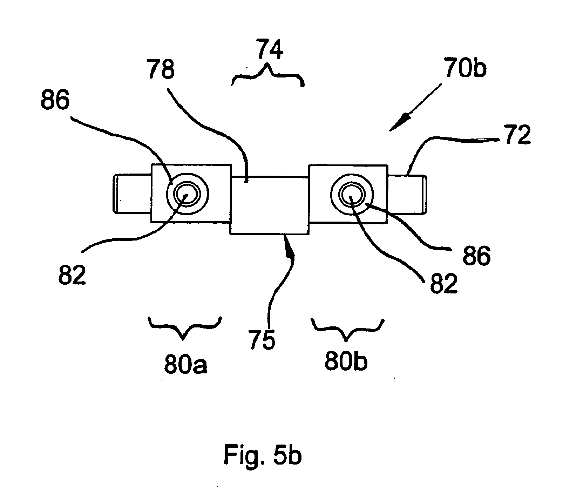

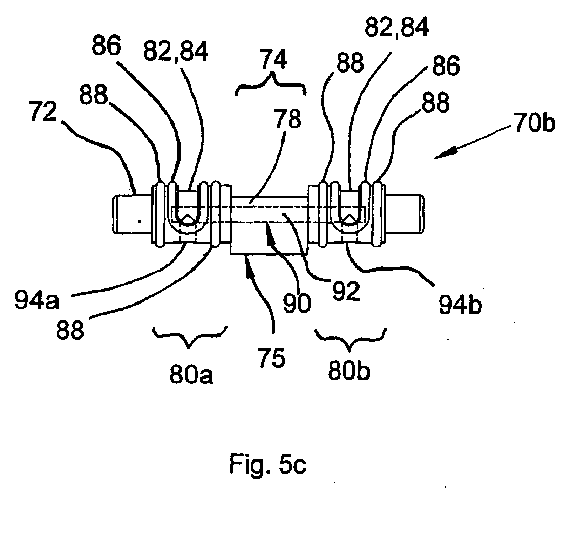

In den Figuren 5b und 5c ist die Verriegelungswelle 70b mit denselben zusätzlichenmerkmalen ausgestattet, wie die Verriegelungswelle 70a, die in den Figuren 4b und 4c dargestellt ist. Dementsprechend kann auch die Verriegelungswelle 70b Ventilabschnitte 80a, 80b sowie eine Bypasseinrichtung 90 aufweisen.

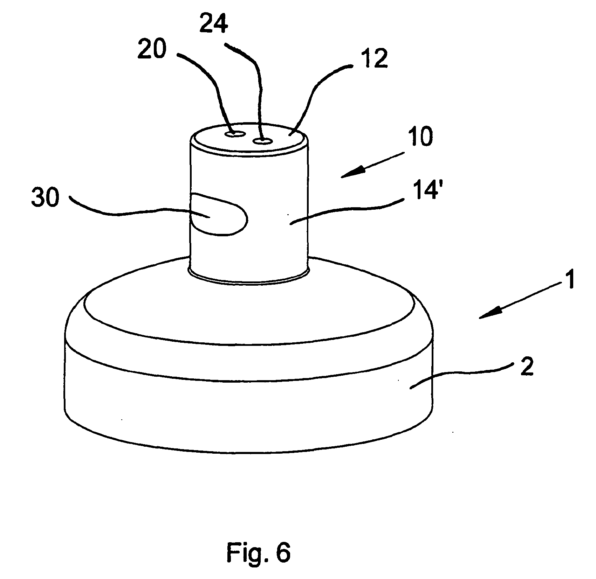

Die Anschlussköpfe 10 können auf verschiedene Weise ausgestaltet sein. Beispielhafte Formen von Anschlussköpfen 10 sind in den Figuren 6, 7 und 8 dargestellt.

In der Figur 6 ist der Anschlusskopf 10 zylindrisch ausgebildet, wobei sich die Aussparung 30 in der Mantelfläche 14' des Anschlusskopfes 10 befindet. Die Eintrittsöffnung 20 und die Austrittsöffnung 24 sind in der Stirnfläche 12 angeordnet. Es ist auch möglich, die Eintrittsöffnung 20 und die Austrittsöffnung 24 an der Mantelfläche 14' vorzusehen.

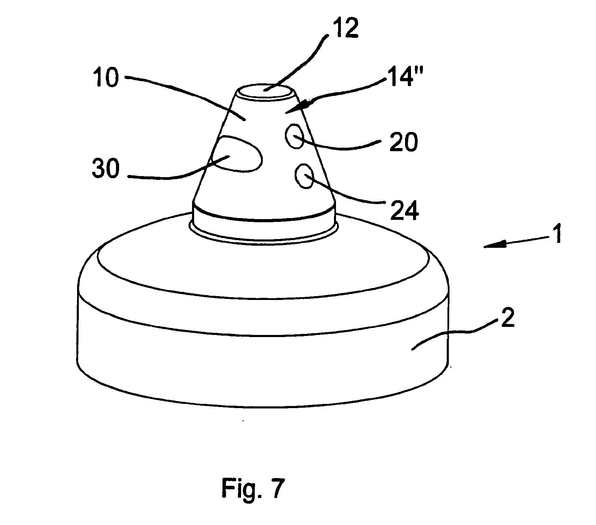

In der Figur 7 ist ein kegelstumpfförmiger Anschlusskopf 10 dargestellt. Die Eintrittsöffnung 20 und die Austrittsöffnung 24 sowie die Aussparung 30 befinden sich in der Kegelfläche 14".

In der Figur 8 ist eine Ausführungsform dargestellt, bei der der Anschlusskopf 10 im Wesentlichen quaderförmig ausgebildet ist, wobei die Außenflächen 14 und 16 zur Längsachse 3 geneigt sind, so dass das Einführen in die Aufnahme 50 erleichtert wird. Die Eintrittsöffnung 20 und die Austrittsöffnung 24, die beide von Dichtelementen 22, 26 umgeben sind, befinden sich in der Seitenfläche 14, während die Aussparung 30 sich in der schmalen Seitenfläche 18 befindet. Es ist zu sehen, dass sich die Aussparung 30 über die gesamte Breite des Anschlusskopfes 10 erstreckt und eine runde Kontur aufweist.

In der Figur 9a ist eine weitere Ausführungsform des Anschlusskopfes 10, wie er in der Figur 8 dargestellt ist, zu sehen. Die Aussparung 30 besitzt im Gegensatz zu der Ausgestaltung der Figur 8 zwei Aussparungsflächen 32 und 34, die in Längsrichtung der Aussparung 30 höhenversetzt zueinander angeordnet sind. Dies bedeutet, dass die Aussparungsfläche 32 tiefer liegt als die Aussparungsfläche 34. Die Krümmungsradien sind unterschiedlich groß und besitzen einen gemeinsamen Mittelpunkt.

In der Fig. 9b ist eine weitere Ausführungsform des Anschlusskopfes 10 dargestellt. Die Aussparung 30 weist einen Steg 36 auf, der sich in vertikaler Richtung erstreckt. In der hier gezeigten Darstellung der Fig. 9b ist der Steg 36 mittig angeordnet und besitzt eine geschwungene Stirnfläche 38. Das Vorsehen des Stegs 36 hat den Vorteil, dass eventuell vorhandene Sperrelemente über den gesamten Entnahmeweg der Kartusche so geführt werden können, dass die Entnahme der Kartusche nicht behindert wird. Weiter können über die Positionierung des Steges spezifische Zuordnungen von Kopf und Kartusche geschaffen werden, um nur einen bestimmten Kartuschentyp in einem Kopf einsetzen zu können.

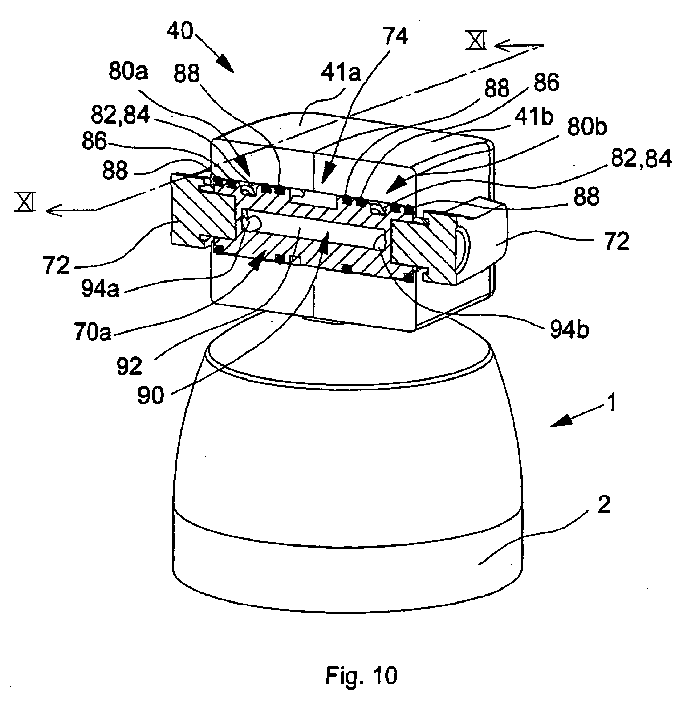

Die Verriegelungswetle 70a weist Verriegelungsflächen 75a, b (s. Fig. 10) auf, die auf die Lage und Krümmung der Aussparungsflächen 32 und 34 abgestimmt sind. Diese Ausgestaltung der Aussparung 30 bietet den Vorteil, dass nur diejenigen Kartuschen 1 in das Aufnahmeelement 40 passen bzw. verriegelt werden können, die entsprechend der Profilierung der Verriegelungsfläche der Verriegelungswelle ausgebildet sind. Es wird dadurch sichergestellt, dass nur diejenigen Kartuschen eingesetzt werden können, die für den betreffenden Zweck vorgesehen sind.

Dieser Sicherheitsaspekt ist insbesondere dann wichtig, wenn Kartuschen für verschiedene Zwecke zur Verfügung stehen und je nach Anwendungszweck bestimmte Kartuschen zum Einsatz kommen sollen und ein Vertauschen von Kartuschen ausgeschlossen werden soll. Eine weitergehende Profilierung der Aussparung 30 ist möglich. Die Figur 9 soll lediglich ein Beispiel einer möglichen Profilierung der Aussparung 30 darstellen.

In der Figur 10 ist ein Vertikalschnitt von Anschlusskopf 10 und Anschlusselement 40 längs der Linie X-X in Figur 2 dargestellt. Im Innem des aus zwei Bauteilen 41a und 41b zusammengesetzten Anschlusselementes 40 ist eine Verriegelungswelle 70a angeordnet, die über Ventilabschnitte 80a, b und eine Bypasseinrichtung 90 verfügt, wie dies in der Figur 4c dargestellt ist. Es handelt sich um eine Hohlwelle, die am Ende durch die beiden Griffe 72 abgeschlossen ist.

Zwischen den beiden Ventilabschnitten 80a und 80b ist der Verriegelungsabschnitt 74 mit der Ausnehmung 76 angeordnet, wobei die Verriegelungsfläche des Verriegelungsabschnitts 74 mit zwei unterschiedlichen höhenversetzten Verriegelungsflächen 75a, b versehen ist, die auf die Profilierung der Aussparung 30 gemäß Figur 9 abgestimmt sind.

Die beiden Ventilabschnitte 80a, b weisen Teilringnuten 84 auf, die von Dichtelementen 86 umgeben sind. In der hier gezeigten Stellung befindet sich die Verriegelungswelle 70a in ihrer Verriegelungsstellung, so dass die beiden Verbindungskanäle 82 die Einlauf- und Auslaufkanäle freigeben.

Im Innern der Hohlwelle befindet sich die Bypasseinrichtung 90 mit dem sich durch die Verriegelungswelle 70a in Längsrichtung erstreckenden Bypasskanal 92, der über Öffnungen 94a, b im Bereich der Ventilabschnitte 80a, b verfügt. Die beiden Öffnungen 94a, b weisen nach unten und stehen somit nicht in Strömungskontakt mit dem Einlaufkanal 46 und dem Auslaufkanal 47. Die Bypasseinrichtung 90 ist in der gezeigten Stellung der Verriegelungswelle 70a stillgelegt.

Beim Entriegeln durch Drehen der Verriegelungswelle 70a werden diese Öffnungen 94a und 94b mit dem Einlaufkanal 46 und dem Auslaufkanal 47 in Verbindung gebracht, so dass das einströmende Wasser durch die Verriegelungswelle 70a umgelenkt und wieder zurückgeführt werden kann, ohne dass Wasser aus der Aufnahme 50 austreten kann, wenn die Kartusche 1 aus der Aufnahme 50 entfernt wird.

In den Figuren 11a und 11b sind Schnitte längs der Linie XI-XI in Figur 10 für die beiden Stellungen der Verriegelungswelle 70a dargestellt, wobei aus Gründen der Übersichtlichkeit die Kartusche 1 weggelassen wurde. In der Figur 11a ist zu sehen, dass der Verbindungskanal 82 die Verbindung zwischen den beiden benachbarten Abschnitten des Einlaufkanals 46 bildet, so dass das zu filtrierende Wasser in das Aufnahmeelement 40 eingeleitet und dem Anschlusskopf 10 der Kartusche 1 zugeführt werden kann. Hierbei greift der Verriegelungsabschnitt 74 in die Aussparung 30 des Anschlusskopfes 10 ein.

In der Figur 11b befindet sich die Verriegelungswelle 70a in Entriegelungsstellung, in der die Ausnehmung 76 den Anschlusskopf 10 freigibt. Hierbei münden die Öffnungen 94a und 94b (nicht dargestellt) in den Einlaufkanal 46 bzw. Auslasskanal 47 (nicht zu sehen), so dass das einströmende Wasser in die Bypasseinrichtung 90 und somit in den Bypasskanal 92 gelangt und unmittelbar über den in der Darstellung nicht gezeigten Ausflusskanal 47 umgelenkt wird. Es wird damit vermieden, dass das einströmende Wasser abgeschaltet werden muss bzw. ein unkontrollierter Austritt im Bereich der Aufnahme 50 bei nicht vorhandener Kartusche 1 stattfindet.

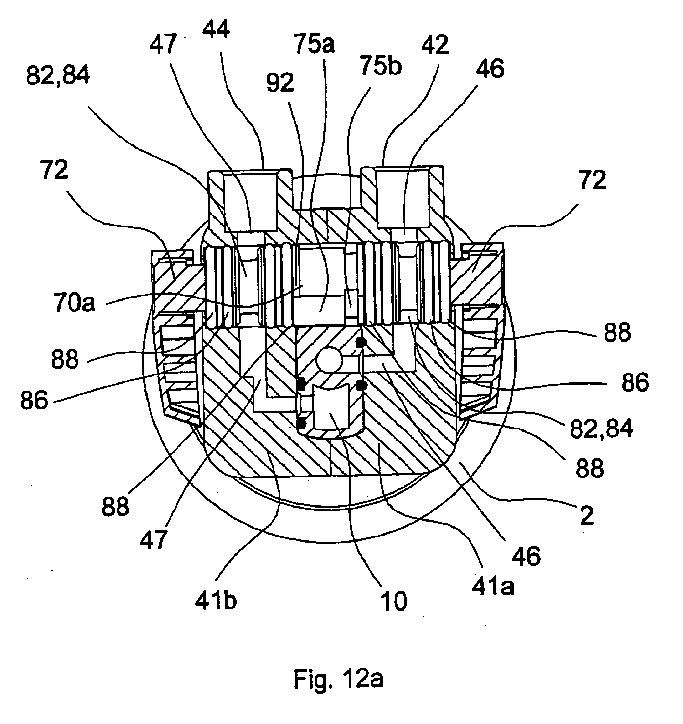

In der Figur 12a ist ein Horizontalschnitt durch die Vorrichtung gemäß Figur 11a dargestellt. Die Verbindungskanäle 82 der Verriegelungswelle 70a verbinden die beiden Zweige des Einlaufkanals 46 und des Auslaufkanals 47, wobei die beiden Zweige jeweils durch die Kanalabschnitte vor und hinter der Verriegelungswelle 70a gebildet werden. Es sind außerdem die beiden Verriegelungsflächen 75a, 75b dargestellt, die zu den entsprechenden Aussparungsflächen 32 und 34 kompatibel sind.

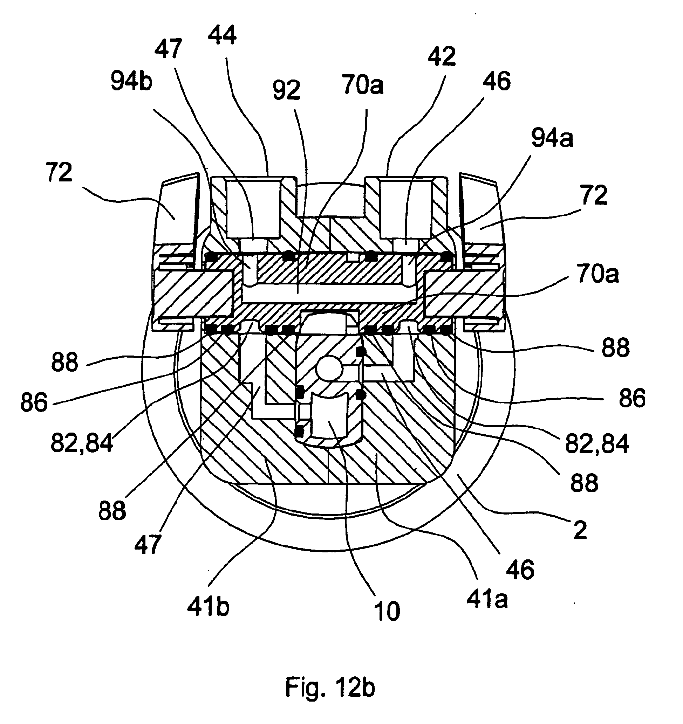

In Figur 12b ist der Horizontalschnitt durch den in Figur 11b gezeigte Vorrichtung dargestellt, in der die Bypasseinrichtung 90 den Anlaufstutzen 42 mit dem Auslaufstutzen 44 verbindet.

### Bezugszeichenliste

- 1: Kartusche
- 2: Behälter
- 3: Längsachse

- 10: Anschlusskopf

- 12: Stirnfläche
- 14: Außenfläche
- 14': Mantelfläche
- 14": Kegelfläche
- 16: Außenfläche
- 18: Seitenfläche

- 20: Eintrittsöffnung
- 22: Dichtelement
- 24: Austrittsöffnung
- 26: Dichtelement

- 30: Aussparung
- 32: Aussparungsfläche
- 34: Aussparungsfläche
- 36: Steg
- 38: Stirnfläche

- 40: Anschlusselement
- 41a, 41b: Bauteil
- 42: Einlaufstutzen
- 44: Auslaufstutzen
- 46: Einlaufkanal
- 47: Auslaufkanal

- 50: Aufnahme
- 70a, b: Verriegelungswelle
- 72: Griff
- 74: Verriegelungsabschnitt
- 75, 75a, b: Verriegelungsfläche
- 76: Ausnehmung
- 77: Bodenfläche
- 78: Exzenterabschnitt

- 80a, b: Ventilabschnitt
- 82: Verbindungskanal
- 84: Teilringnut
- 86: Dichtelement
- 88: Dichtelement

- 90: Bypasseinrichtung
- 92: Bypasskanal
- 94a, b: Öffnung

- 100: Klinke
- 101: Kerbe

- 110: Stift
- 112: Stecköffnung

## Patentansprüche

1. Vorrichtung zur Behandlung von Wasser, insbesondere Filtervorrichtung,
mit einer Kartusche (1), die einen Behälter (2) zur Aufnahme von Behandlungsmittel für Wasser, insbesondere zur Aufnahme von Filtermittel, und einen auf dem Behälter (2) angeordneten Anschlusskopf (10) aufweist, und
mit einem Anschlusselement (40), das eine Aufnahme (50) für den Anschlusskopf (10) umfasst,
**dadurch gekennzeichnet,**
**dass** mindestens eine Verriegelungswelle (70a, b) im Anschlusselement (40) vorgesehen ist, mit der der Anschlusskopf (10) im Anschlusselement (40) fixierbar ist, wobei die Verriegelungswelle (70a, b) drehbar gelagert ist und von einer Verriegelungsstellung in eine Entriegelungsstellung und umgekehrt drehbar ist, und dass der Anschlusskopf (10) mindestens eine Aussparung (30) aufweist, in die die Verriegelungswelle (70a, b) in Verriegelungsstellung eingreift.

2. Vorrichtung nach Anspruch 1, **dadurch gekennzeichnet, dass** die Verriegelungswelle (70a,b) sich senkrecht oder parallel zur Längsachse der Kartusche (1) erstreckt.

3. Vorrichtung nach einem der Ansprüche 1 oder 2, **dadurch gekennzeichnet, dass** die Verriegelungswelle (70a,b) einen Verriegelungsabschnitt (74) aufweist.

4. Vorrichtung nach Anspruch 3, **dadurch gekennzeichnet, dass** der Verriegelungsabschnitt (74) ein Exzenterabschnitt (78) ist.

5. Vorrichtung nach Anspruch 3, **dadurch gekennzeichnet, dass** der Verriegelungsabschnitt (74) eine Ausnehmung (76) aufweist.

6. Vorrichtung nach einem der Ansprüche 1 bis 5, **dadurch gekennzeichnet, dass** das Anschlusselement (40) einen Einlaufkanal (46) und einen Auslaufkanal (47) aufweist, und dass die Verriegelungswelle (70a, b) im Einlaufkanal (46) und/oder Auslaufkanal (47) angeordnet ist, wobei die Verriegelungswelle (70a, b) im Einlaufkanal (46) und/oder im Auslaufkanal (47) einen Ventilabschnitt (80a, b) aufweist.

7. Vorrichtung nach Anspruch 6, **dadurch gekennzeichnet, dass** der Ventilabschnitt (80a, b) einen Verbindungskanal (82) aufweist.

8. Vorrichtung nach Anspruch 7, **dadurch gekennzeichnet, dass** die Verriegelungswelle (70a, b) zwei Ventilabschnitte (80a, b) aufweist, zwischen denen der Verriegelungsabschnitt (74) angeordnet ist.

9. Vorrichtung nach Anspruch 8, **dadurch gekennzeichnet, dass** die Verriegelungswelle (70a, b) eine Bypasseinrichtung (90) aufweist.

10. Vorrichtung nach einem der Ansprüche 6 bis 9, **dadurch gekennzeichnet, dass** die Bypasseinrichtung (90) einen die beiden Ventilabschnitte (80a, b) verbindenden Bypasskanal (92) umfasst.

11. Vorrichtung nach einem der Ansprüche 1 bis 10 **dadurch gekennzeichnet, dass** die Aussparung (30) im Anschlusskopf (10) mindestens eine Aussparungsfläche (32, 34) aufweist.

12. Vorrichtung nach Anspruch 11, **dadurch gekennzeichnet, dass** die Aussparung (30) profiliert ist.

13. Vorrichtung nach Anspruch 12, **dadurch gekennzeichnet, dass** das Anschlusselement (40) eine Klinke (100) aufweist, die an der Verriegelungswelle (70a, b) in Verriegelungsstellung angreift und die Verriegelungswelle (70a, b) festlegt.

14. Kartusche (1) für die Vorrichtung nach einem der Ansprüche 1 bis 13, **dadurch gekennzeichnet,**
**dass** der Anschlusskopf (10) mindestens eine Aussparung (30) für das Eingreifen einer Verriegelungswelle (70a, b) des Anschlusselements (40) aufweist.

## Claims

1. Device for water treatment, in particular a filter device, comprising:
with a cartridge (1), which has a container (2) to receive treatment agents for water, especially to receive filter means, and a connection head (10) arranged on the container (2), and
with a connection element (40), which comprises a seat (50) for the connection head (10),
**characterized in that** at least one locking shaft (70a, b) is provided in the connection element (40), with which the connection head (10) is secured to the connection element (40), while the locking shaft (70a, b) is rotationally mounted and can be turned from a locking position into an unlocked position and vice versa, and that the connection head (10) comprises at least one recess, with which the locking shaft engages in its locking position.

2. The device according to claims 1, **characterized in that** the locking shaft (70a, b) extends perpendicular or parallel to a lengthwise axis of the cartridge (1).

3. The device according to claim 1 or 2, **characterized in that** the locking shaft (70a, b) comprises a locking segment (74).

4. The device according to claim 3, **characterized in that** the locking segment (74) is an eccentric segment (78).

5. The device according to claim 3, **characterized in that** the locking segment (74) comprises a recess (76).

6. The device according to one of claims 1 through 5, **characterized in that** the connection element (40) has an inlet channel (46) and an outlet channel (47), and that the locking shaft (70a, b) is arranged in the inlet channel (46) and/or in the outlet channel (47), wherein the locking shaft (70a, b) has a valve segment (80a, b) in the inlet channel (46) and/or in the outlet channel (47).

7. The device according to claim 6, **characterized in that** the valve segment (80a, b) comprises a connection channel (82).

8. The device according to claim 7, **characterized in that** the locking shaft (70a, b) comprises two valve segments (80a, b), between which the locking segment (74) is arranged.

9. The device according to claim 8, **characterized in that** the locking shaft (70a, b) comprises a bypass mechanism (90).

10. The device according to claims 6 to 9, **characterized in that** the bypass mechanism (90) comprises a bypass channel (92) joining the two valve segments (80a, b).

11. The device according to claims 1 to 10, **characterized in that** the recess (30) in the connection head (10) comprises at least one recess surface (32, 34).

12. The device according to claim 11, **characterized in that** the recess (30) is profiled.

13. The device according to claim 12, **characterized in that** the connection element (40) comprises a latch (100), which engages with the locking shaft (70a, b) in the locking position and secures the locking shaft (70a,b).

14. A cartridge (1) for the device according to claims 1 to 13, **characterized in that** the connection head (10) comprises at least one recess (30) for engaging with a locking shaft (70a, b) of the connection element (40).

## Revendications

1. Dispositif pour le traitement de l'eau, en particulier dispositif de filtration,
avec une cartouche (1) comportant un récipient (2) destiné à recevoir un agent de traitement pour l'eau, en particulier un agent de filtration, et une tête de raccordement (10) placée sur le récipient (2), et
avec un élément de raccordement (40) comprenant un logement (50) pour la tête de raccordement (10),
**caractérisé**
**en ce qu'**il est prévu au moins un arbre de verrouillage (70a, b) dans l'élément de raccordement (40) au moyen duquel la tête de raccordement (10) peut être fixée dans l'élément de raccordement (40), ledit arbre de verrouillage (70a, b) étant monté de manière rotative et pouvant tourner d'une position de verrouillage vers une position de déverrouillage et inversement, et en ce que la tête de raccordement (10) comporte au moins une cavité (30) dans laquelle s'engage l'arbre de verrouillage (70a, b) en position de verrouillage.

2. Dispositif selon la revendication 1, **caractérisé en ce que** l'arbre de verrouillage (70a, b) s'étend perpendiculairement ou parallèlement à l'axe longitudinal de la cartouche (1).

3. Dispositif selon l'une des revendications 1 ou 2, **caractérisé en ce que** l'arbre de verrouillage (70a, b) comporte un tronçon de verrouillage (74).

4. Dispositif selon la revendication 3, **caractérisé en ce que** le tronçon de verrouillage (74) est un tronçon excentré (78).

5. Dispositif selon la revendication 3, **caractérisé en ce que** le tronçon de verrouillage (74) présente un évidement (76).

6. Dispositif selon l'une des revendications 1 à 5, **caractérisé en ce que** l'élément de raccordement (40) comporte un canal d' admission (46) et un canal de sortie (47), et **en ce que** l'arbre de verrouillage (70a, b) est disposé dans le canal d'admission (46) et/ou dans le canal de sortie (47), ledit arbre de verrouillage (70a, b) comportant un tronçon à vanne (80a, b) dans le canal d'admission (46) et/ou dans le canal de sortie (47).

7. Dispositif selon la revendication 6, **caractérisé en ce que** le tronçon à vanne (80a, b) comporte un canal de liaison (82).

8. Dispositif selon la revendication 7, **caractérisé en ce que** l'arbre de verrouillage (70a, b) comporte deux tronçons à vanne (80a, b), entre lesquels est disposé le tronçon de verrouillage (74).

9. Dispositif selon la revendication 8, **caractérisé en ce que** l'arbre de verrouillage (70a, b) comporte un dispositif de dérivation (90).

10. Dispositif selon l'une des revendications 6 à 9, **caractérisé en ce que** le dispositif de dérivation (90) comprend un canal de dérivation (92) reliant les deux tronçons à vanne (80a, b).

11. Dispositif selon l'une des revendications 1 à 10, **caractérisé en ce que** la cavité (30) comporte au moins une surface de cavité (32, 34) dans la tête de raccordement (10).

12. Dispositif selon la revendication 11, **caractérisé en ce que** la cavité (30) est profilée.

13. Dispositif selon la revendication 12, **caractérisé en ce que** l'élément de raccordement (40) comporte un cliquet (100) qui a prise sur l'arbre de verrouillage (70a, b) en position de verrouillage et qui bloque ledit arbre de verrouillage (70a, b).

14. Cartouche (1) pour le dispositif selon l'une des revendications 1 à 13, **caractérisée**
**en ce que** la tête de raccordement (10) comporte au moins une cavité (30) pour l'engagement d'un arbre de verrouillage (70a, b) de l'élément de raccordement (40).
